(19) Europäisches Patentamt / European Patent Office / Office européen des brevets

(11) **EP 4 708 892 A1**

(12) **EUROPEAN PATENT APPLICATION**
published in accordance with Art. 153(4) EPC

(43) Date of publication:
**11.03.2026 Bulletin 2026/11**

(21) Application number: **24800059.8**

(22) Date of filing: **15.04.2024**

(51) International Patent Classification (IPC):
*H04N 23/60* (2023.01)     *G01B 11/00* (2006.01)
*G01B 11/24* (2006.01)     *G01C 3/06* (2006.01)
*H04N 23/55* (2023.01)     *H04N 23/56* (2023.01)
*H04N 23/74* (2023.01)

(52) Cooperative Patent Classification (CPC):
**G01B 11/00; G01B 11/24; G01C 3/06; H04N 23/55;
H04N 23/56; H04N 23/60; H04N 23/74**

(86) International application number:
**PCT/JP2024/014971**

(87) International publication number:
**WO 2024/228328 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.05.2023 JP 2023075444**

(71) Applicant: **Sony Group Corporation
Tokyo 108-0075 (JP)**

(72) Inventor: **ICHIHASHI Hideyuki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE AND METHOD**

(57)     The present disclosure relates to an information processing device and a method to make it possible to suppress reflection by a multipath.

At a time of polarization imaging, a recommended polarization direction of irradiation light emitted from a light emitting unit is derived according to a shape of an object in a three-dimensional space, and an operation for bringing a polarization direction of the irradiation light closer to the recommended polarization direction is guided. The polarization imaging is an imaging method in which the object irradiated with irradiation light polarized in a first direction is imaged by an imaging unit via a configuration that polarizes in a second direction, the second direction is a direction orthogonal to the first direction or a direction parallel to the first direction, and the recommended polarization direction is a direction in which a specular reflection component of the irradiation light, which is specularly reflected on a plurality of surfaces of the object and incident on the imaging unit, is at least equal to or less than an average. The present disclosure may be applied to, for example, an information processing device, electronic equipment, an information processing method, a program, or the like.

*FIG. 8*

# Description

## TECHNICAL FIELD

The present disclosure relates to an information processing device and a method, and more particularly to an information processing device and a method capable of suppressing reflection due to a multipath.

## BACKGROUND ART

Conventionally, as a method for 3D modeling of a 3D object having a three-dimensional shape, there has been a method called photogrammetry, in which a plurality of images of the 3D object is captured from multiple directions and 3D data is generated on the basis of the obtained plurality of captured images. In the case of such a method, when a specular reflection component (mirror reflection component) in the 3D object is included in the captured image, there is a possibility that an error occurs in matching between viewpoints or a quality of a texture is reduced.

On the other hand, there has been an imaging method for capturing a 3D object by using a polarization sensor or a polarization camera (see, for example, Patent Document 1 and Patent Document 2). With such an imaging method, material information of the 3D object can be obtained more precisely. However, since the ambient light of the 3D object cannot be controlled, a specular reflection component may not be sufficiently removed from the captured image.

Therefore, a method of irradiating a 3D object with flash light polarized in a predetermined direction to perform imaging has been conceived. For example, by irradiating the 3D object with flash light polarized in a first direction and imaging the 3D object via a polarizing filter that polarizes in a second direction perpendicular to the first direction, a specular reflection component included in the captured image can be further suppressed.

## CITATION LIST

## PATENT DOCUMENT

Patent Document 1: WO 2022/259466 A
Patent Document 2: WO 2019/069536 A

## SUMMARY OF THE INVENTION

## PROBLEMS TO BE SOLVED BY THE INVENTION

However, also in the case of this imaging method, when the flash light is reflected by a plurality of surfaces and is incident on an imaging unit (when a so-called multipath occurs), there is a possibility that a phenomenon so-called reflection or the like in which a color, a pattern, or the like of another surface is projected on a surface of the 3D object occurs.

The present disclosure has been made in view of such circumstances, and it is therefore an object of the present disclosure to make it possible to suppress reflection by a multipath.

## SOLUTIONS TO PROBLEMS

An information processing device according to one aspect of the present technology is an information processing device including: a recommended polarization direction derivation unit configured to derive a recommended polarization direction of irradiation light emitted from a light emitting unit according to a shape of an object in a three-dimensional space at a time of polarization imaging; and a guide unit configured to guide an operation for bringing a polarization direction of the irradiation light closer to the recommended polarization direction, in which the polarization imaging is an imaging method in which the object irradiated with the irradiation light polarized in a first direction is imaged by an imaging unit via a configuration that polarizes in a second direction, the second direction is a direction orthogonal to the first direction or a direction parallel to the first direction, and the recommended polarization direction is a direction in which a specular reflection component of the irradiation light, which is specularly reflected on a plurality of surfaces of the object and incident on the imaging unit, is at least equal to or less than an average.

An information processing method according to one aspect of the present technology is an information processing method including:

deriving a recommended polarization direction of irradiation light emitted from a light emitting unit according to a shape of an object in a three-dimensional space at a time of polarization imaging; and guiding an operation for bringing a polarization direction of the irradiation light closer to the recommended polarization direction, in which the polarization imaging is an imaging method in which the object irradiated with the irradiation light polarized in a first direction is imaged by an imaging unit via a configuration that polarizes in a second direction, the second direction is a direction orthogonal to the first direction or a direction parallel to the first direction, and the recommended polarization direction is a direction in which a specular reflection component of the irradiation light, which is specularly reflected on a plurality of surfaces of the object and incident on the imaging unit, is at least equal to or less than an average.

In the information processing device and the method according to one aspect of the present technology, at the time of polarization imaging, a recommended polarization direction of irradiation light emitted from a light emitting unit is derived according to a shape of an object in a three-dimensional space, and an operation for bringing a polarization direction of the irradiation light closer to the recommended polarization direction is guided.

BRIEF DESCRIPTION OF DRAWINGS

Fig. 1 is a diagram for describing an overview of photogrammetry.

Fig. 2 is a diagram illustrating an example of a state of cross-polarization imaging.

Fig. 3 is a diagram illustrating an example of a multipath.

Fig. 4 is a diagram illustrating an example of luminance unevenness.

Fig. 5 is a diagram for describing a method for guiding an operation of a polarization direction.

Fig. 6 is a diagram illustrating an example of a polarization direction with respect to an incident surface.

Fig. 7 is a diagram illustrating an example of reflectivity.

Fig. 8 is a diagram for describing an example of a state of specular reflection.

Fig. 9 is a diagram illustrating an example of guidance display.

Fig. 10 is a diagram illustrating an example of guidance display.

Fig. 11 is a diagram illustrating an example of a normal map.

Fig. 12 is a diagram illustrating an example of a state of plane derivation.

Fig. 13 is a block diagram illustrating a main configuration example of an imaging device.

Fig. 14 is a block diagram illustrating a main configuration example of a recommended polarization direction derivation unit.

Fig. 15 is a flowchart for describing an example of a flow of imaging processing.

Fig. 16 is a flowchart for describing an example of a flow of polarization direction guidance processing.

Fig. 17 is a flowchart for describing an example of a flow of recommended polarization direction derivation processing.

Fig. 18 is a flowchart for describing an example of a flow of polarization direction guidance processing.

Fig. 19 is a block diagram illustrating a main configuration example of a computer.

MODE FOR CARRYING OUT THE INVENTION

Hereinafter, modes for carrying out the present disclosure (hereinafter, referred to as embodiments) will be described. Note that the description will be given in the following order.

1. Documents and the like supporting technical content and technical terms
2. 3D modeling and polarization imaging
3. Operation guidance of polarization direction
4. First embodiment (imaging device)
5. Supplementary note

<1. Documents and the like supporting technical content and technical terms>

The scope disclosed in the present technology includes not only the contents described in the embodiments but also the contents described in the following patent documents and the like known at the time of filing, the contents of other documents referred to in the following patent documents, and the like.
Patent Document 1: (described above)
Patent Document 2: (described above)

That is, the contents described in the above-described patent documents, the contents of other documents referred to in the above-described patent documents, and the like are also grounds for determining the support requirement.

<2. 3D Modeling and Polarization Imaging>

<3D Modeling>

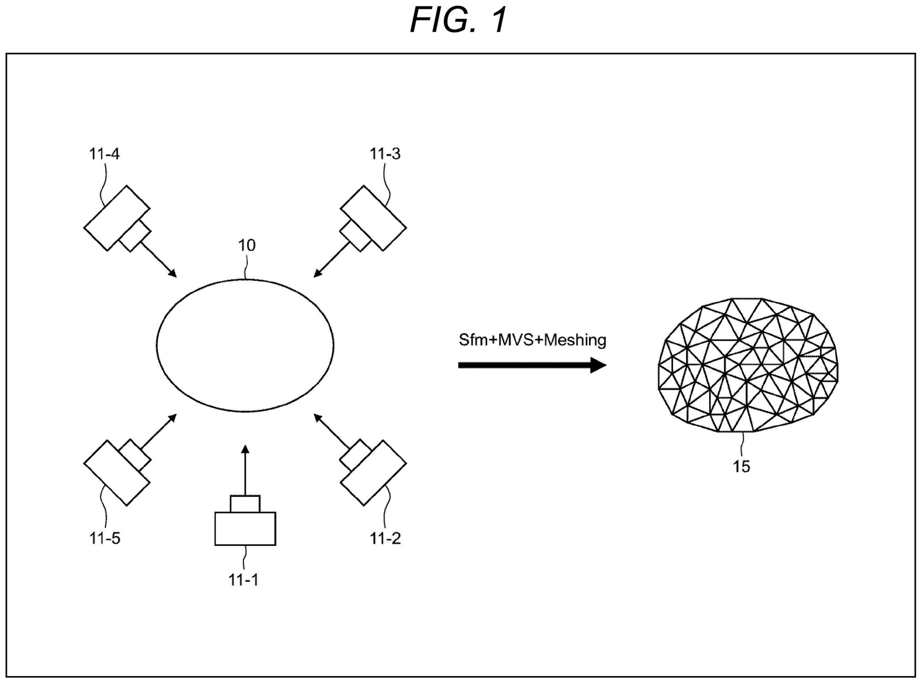

Conventionally, as a method for 3D modeling of a 3D object having a three-dimensional shape, there has been a method called photogrammetry, in which a plurality of images of the 3D object is captured from multiple directions and 3D data is generated on the basis of the obtained plurality of captured images. In the case of such a method, the three-dimensional position of the 3D object is obtained in the manner of triangulation by imaging the same place from a plurality of viewpoints. Therefore, matching (detection of the same position of the 3D object) is performed between the plurality of captured images.
Photogrammetry is a method for reconfiguring a highly accurate three-dimensional model from a plurality of images imaged from various viewpoints using the principle of triangulation. Note that the "accuracy" of the 3D data (3D model) may herein include not only reproducibility (precision, resolution, or the like) of the three-dimensional shape of the target 3D object but also reproducibility (precision, resolution, or the like) of the texture applied to the surface of the 3D model. For example, cameras such as cameras 11-1 to 11-5 illustrated in Fig. 1 image a 3D object 10 from a plurality of viewpoints to obtain a plurality of captured images. Then, processing called structure from motion (SfM) and processing called multi view stereo (MVS) are performed using these captured images and the like, and meshing and texturing are further performed as post-processing to generate 3D data 15.

In the SfM, for example, a corresponding point is searched for between the captured images, the position and orientation of each camera are derived using epipolar constraint, and the position of each corresponding point in the three-dimensional space is determined by triangulation based on the position and orientation of the camera. This point on the three-dimensional space is also referred to herein as a three-dimensional point. That is, the three-dimensional point for each corresponding point is determined. Then, the entirety of a three-dimensional point cloud determined as described above is then optimized through bundle adjustment.

Moreover, in MVS, for example, denser corresponding points are searched for using the three-dimensional point cloud derived as described above, and resultant three-dimensional points are added.

As described above, since global optimization calculation for minimizing errors, that is, bundle adjustment, is performed in photogrammetry, a highly accurate result can be obtained, but a calculation load is large.

Furthermore, photogrammetry is based on geometric calculation rather than physical measurement, so that, in principle, the higher the resolution of the image being used, the more accurate the model being restored.

<Influence of Specular Reflection Component>

For example, in a case where specular reflection (mirror reflection) occurs in a 3D object due to an illumination environment or the like, the luminance may be saturated in a portion where the specular reflection occurs in the 3D object in the captured image. In such a case, matching between the captured images becomes difficult, and there is a possibility of failure. Furthermore, even if the luminance is not saturated, the specularly reflected reflected light (specular reflection component or mirror reflection component) travels in a predetermined direction (limited direction). Therefore, due to the specular reflection component, a color, brightness, and the like of the 3D object may be different between the captured images of the respective viewpoints. Therefore, there is a possibility that matching between the captured images fails. As described above, there is a possibility that the accuracy (precision) of the matching between the captured images is reduced due to the specular reflection component.

Furthermore, in the captured image, the color, brightness, and the like of the 3D object may locally change due to the specular reflection component. That is, there is a possibility that the color, brightness, and the like of the portion of the 3D object where the specular reflection has occurred are different from those around the portion (that is, it changes from the color, brightness, and the like in an original state of the 3D object having no specular reflection component). That is, there is a possibility that a quality of a texture of the 3D object obtained from the captured image is reduced.

Furthermore, in general, it is preferable that the 3D model can be used under an arbitrary illumination condition (an illumination condition for the 3D model is variable). Therefore, it is desirable that the texture of the 3D model does not include the influence of a specific illumination condition. However, the specular reflection component as described above appears as, for example, a so-called "shine" having higher luminance than the surroundings in the captured image. That is, the influence of the specific illumination condition is included in the texture. Therefore, the texture does not conform to the illumination condition under which the 3D model is installed, and there is a possibility that realistic feeling is reduced. In this sense as well, there is a possibility that the quality of the texture of the 3D object obtained from the captured image is reduced.

<Polarization Imaging>

On the other hand, for example, there has been an imaging method for imaging a 3D object by using a polarization sensor or a polarization camera as in the methods described in Patent Document 1 and Patent Document 2. The polarization sensor or the polarization camera has a configuration (for example, a polarizing filter or the like) that polarizes light from a subject incident on the imaging unit in a predetermined direction, and receives a polarization component of the light from the subject to generate a captured image. In the present specification, imaging by receiving a polarization component of light from a subject in this manner is referred to as polarization imaging. With such an imaging method, material information of the 3D object can be obtained more precisely. However, in this method, since the ambient light incident on the 3D object cannot be controlled, the specular reflection component may not be sufficiently removed from the captured image.

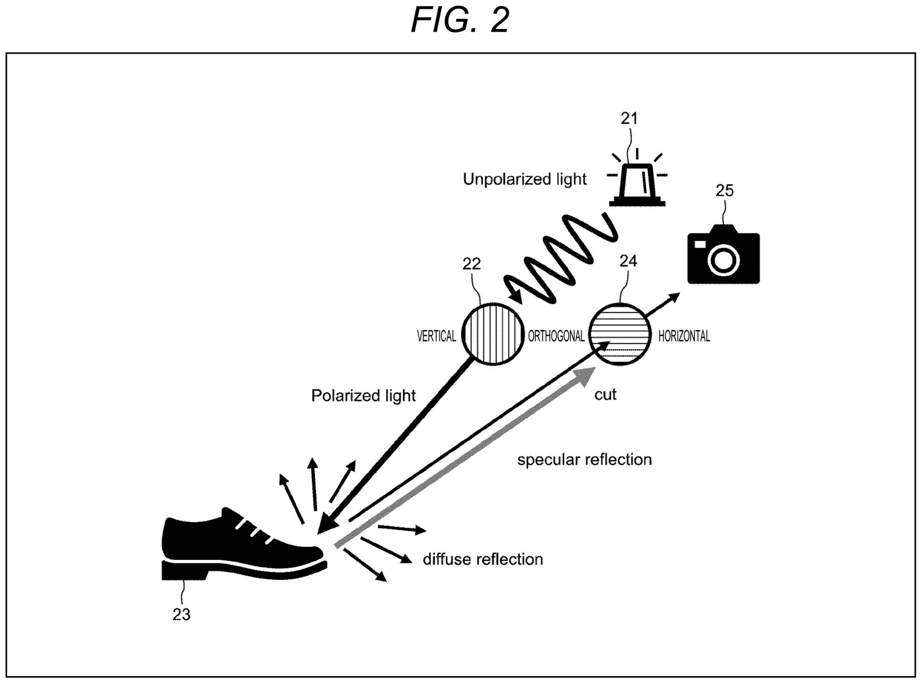

Therefore, a method has been conceived in which a 3D object is irradiated with flash light (irradiation light) polarized in a predetermined direction to perform imaging. For example, as illustrated in Fig. 2, a light emitting unit 21 emits light, the light from the light emitting unit 21 is polarized in a predetermined direction (first direction) by a polarizing filter 22 or the like, the polarized irradiation light is emitted to a 3D object 23, and the reflected light becomes dominant. Then, the reflected light is polarized in a predetermined direction (second direction) by a polarizing filter 24 or the like, and the transmitted light is received by an imaging unit 25 to generate a captured image.

At this time, since the specular reflection component of the reflected light of the 3D object is polarized in the first direction (the component polarized in the first direction is dominant), the specular reflection component incident on the imaging unit can be further reduced by setting the second direction to a right angle (relative angle is 90 degrees) with respect to the first direction. Therefore, matching between the captured images can be performed more precisely. Therefore, a more precise 3D model can be generated. Furthermore, the original color, pattern, and the like (of a diffuse reflection component) of the 3D object can be detected more precisely, and the influence of the specific illumination condition on the captured image can be further suppressed. Therefore, the reduction in the quality of the texture can be further suppressed.

Note that in the present specification, such a polarization imaging method (that is, the polarization imaging method in which the polarization direction on the light emitting unit 21 side (the polarization direction of the polarizing filter 22) and the polarization direction on the imaging unit 25 side (the polarization direction of the polarizing filter 24) are in a relationship of a right angle (relative angle is 90 degrees)) is referred to as a cross-polarization imaging method. Since the specular reflection component can be suppressed as described above by the cross-polarization imaging, the diffuse reflection component can be further detected. Note that the first direction and the second direction may be parallel to each other. In the present specification, such polarization imaging is also referred to as parallel polarization imaging. In a case of the parallel polarization imaging, both a specular reflection component and a diffuse reflection component are received by the imaging unit 25, and a captured image is generated.

<Multipath>

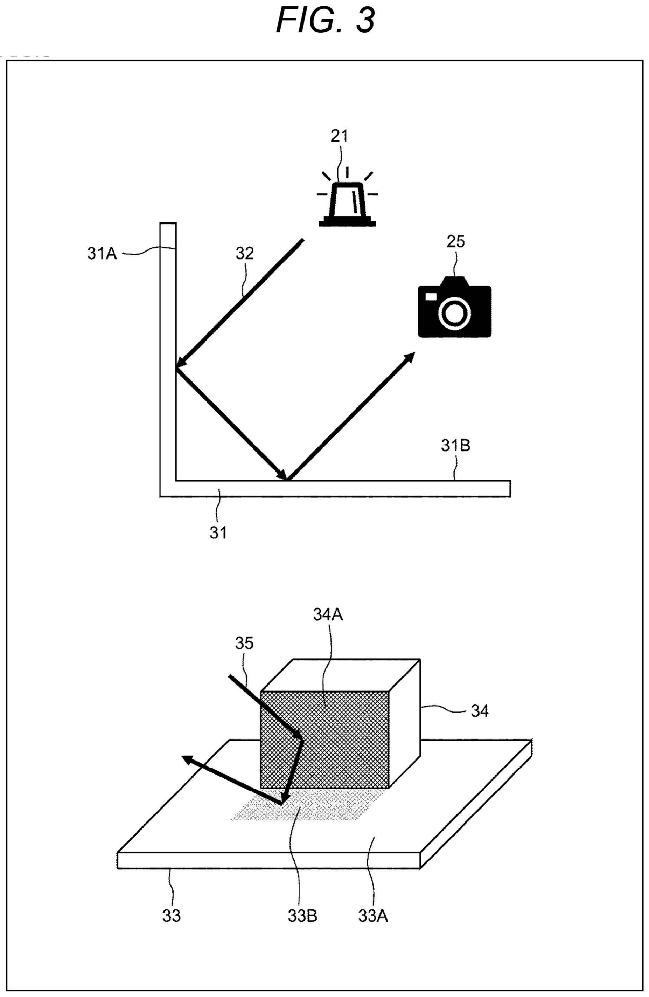

Depending on the shape of the 3D object, a specular reflection component reflected by a plurality of surfaces of the 3D object may be received by the imaging unit. In the case of the example illustrated in an upper side of Fig. 3, irradiation light 32 emitted from the light emitting unit 21 is specularly reflected by a surface 31A and a surface 31B of a 3D object 31 and received by the imaging unit 25 as indicated by arrows. In the present specification, a path of light specularly reflected by a plurality of surfaces as described above is referred to as a multipath.

A phenomenon so-called "reflection" in which a pattern, a color, or the like of a certain reflective surface is projected on another reflective surface in such a multipath may occur. For example, as illustrated in a lower side of Fig. 3, when irradiation light 35 travels along a multipath as indicated by arrows and is specularly reflected by a surface 34A of a 3D object 34 and a surface 33A of a 3D object 33, respectively, the color, pattern, and the like of the surface 34A may be projected (reflected) on (a region 33B of) the surface 33A by the irradiation light 35. Originally (in the diffuse reflection component), it is assumed that the color, pattern, and the like are uniform over the entire surface 33A. That is, it is assumed that the color, pattern, and the like of the region 33B are the same as the color, pattern, and the like of the other portion of the surface 33A. In this case, in the captured image generated by receiving the irradiation light 35 by the imaging unit, the color, pattern, and the like of the region 33B are different from the color, pattern, and the like of the other portion of the surface 33A due to the reflection. That is, there is a possibility that the quality of the texture is reduced by the occurrence of the reflection due to the multipath. Furthermore, due to the occurrence of such reflection, there is a possibility that the appearance (color, pattern, and the like) of the region 33B in each captured image is different, and there is a possibility that the accuracy of the matching between the captured images is reduced.

Even in the case of the cross-polarization imaging or the parallel polarization imaging as described above, it is difficult to completely remove the specular reflection component, and thus, there is a possibility of being affected by the occurrence of such multipath. That is, there is a possibility that the reflection due to the multipath occurs. Furthermore, there is a possibility that this reduces the accuracy of the matching between the captured images or reduces the quality of the texture.

<Luminance Unevenness Due to Imaging Distance>

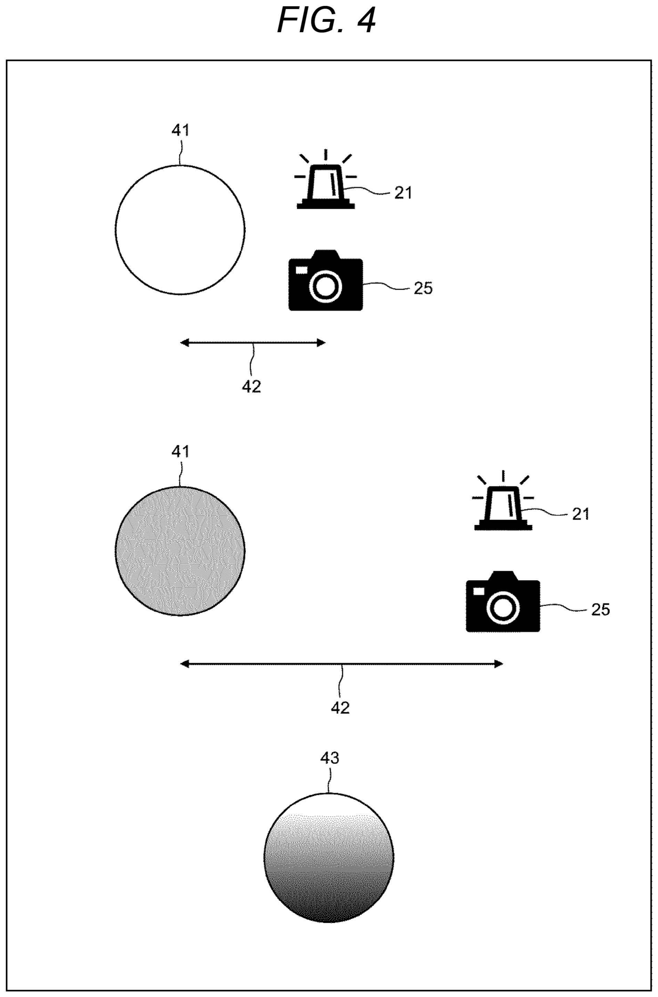

Furthermore, in a case where imaging is performed by irradiating a 3D object with light from a light emitting unit as in the above-described cross-polarization imaging or parallel polarization imaging, an intensity of reflected light depends on a distance from the light emitting unit or the imaging unit to the 3D object. For example, as illustrated in an upper part of Fig. 4, in a case where imaging is performed on a 3D object 41 from a position at a short distance, that is, in a case where a distance 42 from the light emitting unit 21 or the imaging unit 25 to the 3D object 41 is a relatively short distance, the 3D object 41 is imaged with relatively high luminance. On the other hand, as illustrated in a middle part of Fig. 4, in a case where imaging is performed on the 3D object 41 from a position at a long distance, that is, in a case where the distance 42 from the light emitting unit 21 or the imaging unit 25 to the 3D object 41 is a relatively long distance, the 3D object 41 is imaged with relatively low luminance. As described above, when 3D modeling is performed by using a plurality of captured images having different distances to the subject, even if the luminance is uniform over the entire 3D object 41, as illustrated in the middle part of Fig. 4, there is a possibility that a 3D model 43 having different luminance depending on the portion is generated. That is, there is a possibility that a so-called "luminance unevenness" occurs in (the texture of) the 3D model. That is, there is a possibility that the quality of the texture is reduced.

<3. Operation Guidance of Polarization Direction>

<Method 1>

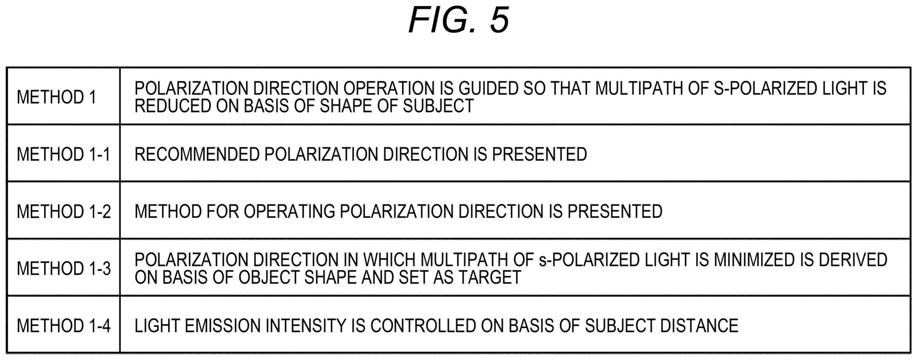

Therefore, as indicated in an uppermost row of a table in Fig. 5, a polarization direction operation is guided so that a multipath of s-polarized light is reduced on the basis of a shape of a subject (Method 1).

For example, at a time of polarization imaging, an information processing device includes: a recommended polarization direction derivation unit that derives a recommended polarization direction of irradiation light emitted from a light emitting unit according to a shape of an object in a three-dimensional space; and a guide unit that guides an operation for bringing the polarization direction of the irradiation light closer to the recommended polarization direction. For example, in an information processing method executed by an information processing device, at a time of polarization imaging, a recommended polarization direction of irradiation light emitted from a light emitting unit is derived according to a shape of an object in a three-dimensional space, and an operation for bringing the polarization direction of the irradiation light closer to the recommended polarization direction is guided.

Note that polarization imaging is an imaging method in which an object irradiated with irradiation light polarized in a first direction is imaged by an imaging unit via a configuration that polarizes in a second direction. Furthermore, the second direction is a direction orthogonal to the first direction or a direction parallel to the first direction. Furthermore, the recommended polarization direction is a direction in which a specular reflection component of the irradiation light, which is specularly reflected by a plurality of surfaces of the object and incident on the imaging unit, is at least equal to or less than an average.

That is, the recommended polarization direction is derived so as to reduce the specular reflection component of the multipath detected by the imaging unit. By reducing the specular reflection component of the multipath detected by the imaging unit in this manner, it is possible to suppress the occurrence of reflection due to the multipath in the captured image. Therefore, it is possible to suppress the reduction in the accuracy of the matching between the captured images and the reduction in the quality of the texture due to the reflection. Note that the multipath occurs depending on the shape of the object. Therefore, as described above, the recommended polarization direction may be derived according to the shape of the object.

For example, a polarization direction in which the specular reflection component of the multipath detected by the imaging unit is equal to or less than a predetermined reference may be derived as the recommended polarization direction. This reference may be any value. Since the purpose is to reduce the specular reflection component of the multipath, for example, a polarization direction in which the specular reflection component of the multipath detected by the imaging unit for all the polarization directions is at least equal to or less than the average may be set as the recommended polarization direction.

As the reference value is smaller, the occurrence of reflection due to the multipath in the captured image can be further suppressed. For example, a polarization direction in which the specular reflection component of the multipath detected by the imaging unit is estimated to be minimum may be set as the recommended polarization direction. Furthermore, for example, a polarization direction in which the specular reflection component of the multipath detected by the imaging unit is minimized may be set as the recommended polarization direction. By doing so, the occurrence of reflection due to the multipath in the captured image can be further suppressed. Therefore, it is possible to further suppress the reduction in the accuracy of the matching between the captured images and the reduction in the quality of the texture due to the reflection.

Furthermore, in that case, the recommended polarization direction may be a direction in which an s-polarization component of the specular reflection component of the multipath detected by the imaging unit, in which a vibration direction of an electric field when reflected from the surface of the object is perpendicular to the incident surface, is estimated to be minimum. Furthermore, the recommended polarization direction may be a direction in which an s-polarization component of the specular reflection component of the multipath detected by the imaging unit, in which a vibration direction of an electric field when reflected from the surface of the object is perpendicular to the incident surface, is minimized.

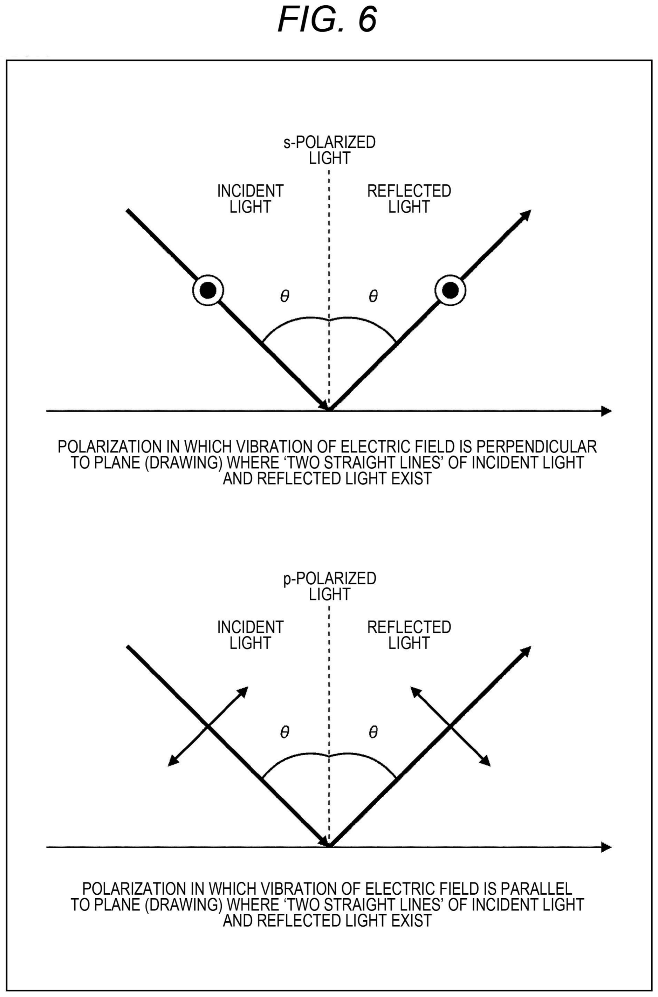

The specularly reflected light has an s-polarization component and a p-polarization component as polarization components. As illustrated in an upper side of Fig. 6, a polarization component in which a vibration direction of an electric field is perpendicular to a plane (also referred to as an incident surface) where two straight lines of the incident light and the reflected light exist is referred to as s-polarization (component). In the example of Fig. 6, since the paper surface is the incident surface, the electric field of the s-polarization component vibrates in a direction perpendicular to the paper surface.

On the other hand, as illustrated in a lower side of Fig. 6, a polarization component in which the vibration direction of the electric field is parallel to the plane (incident surface) where two straight lines of the incident light and the reflected light exist is referred to as p-polarization (component). In the case of the example of Fig. 6, since the paper surface is the incident surface, the electric field of the p-polarization component vibrates parallel to the paper surface (in the direction indicated by double-headed arrows).

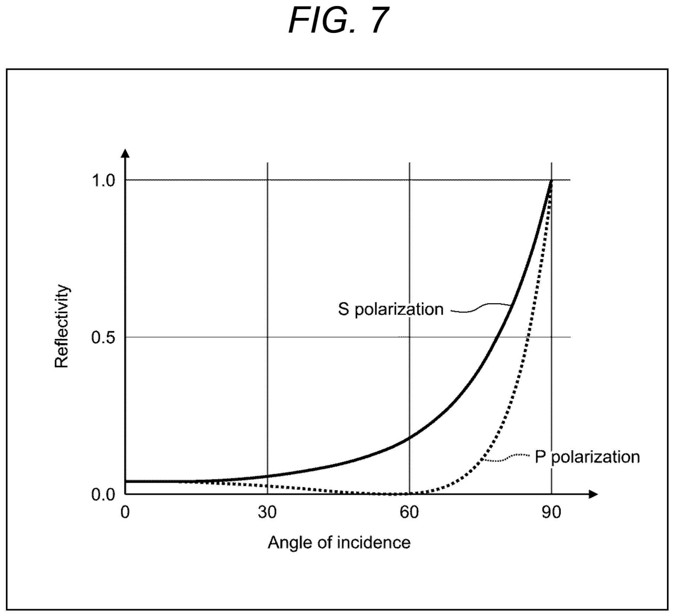

The s-polarization component and the p-polarization component have different reflectivity in the specular reflection. In a graph illustrated in Fig. 7, a horizontal axis represents an angle of incidence, and a vertical axis represents the reflectivity. Furthermore, a solid line indicates the s-polarization component, and a dotted line indicates the p-polarization component. That is, in general, the reflectivity of the s-polarization component is larger than that of the p-polarization component.

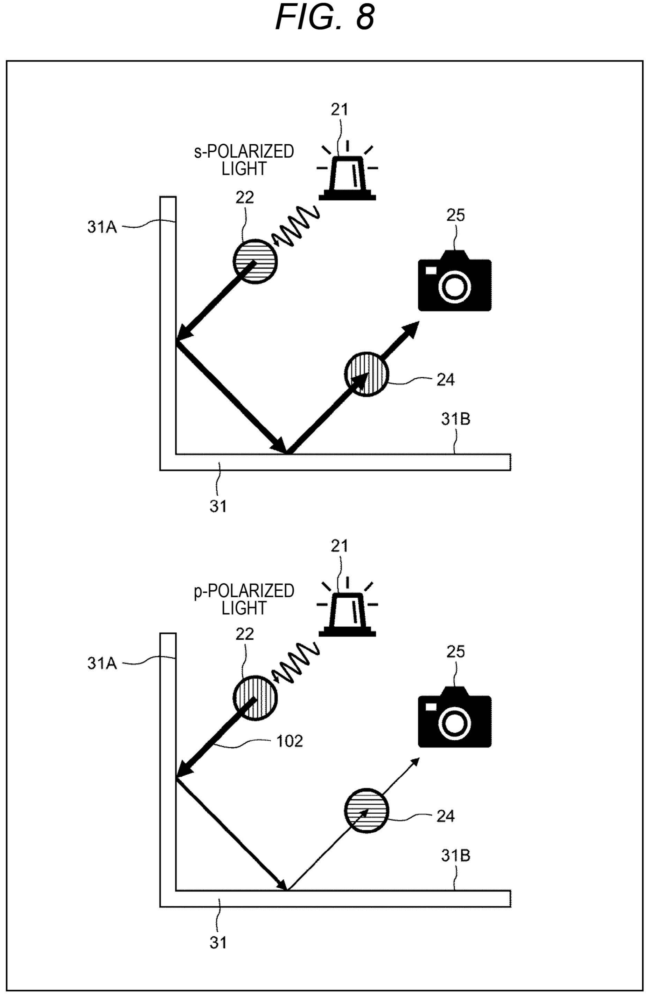

For example, in the case of the multipath as in the example of Fig. 3, as illustrated in an upper side of Fig. 8, s-polarized light 101 is specularly reflected at a smaller attenuation rate than that in the case of p-polarized light, and is incident on the imaging unit 25. On the other hand, as illustrated in a lower side of Fig. 8, p-polarized light 102 attenuates more than the s-polarized light 101 every time it is specularly reflected. That is, the s-polarization component contributes more to the reflection due to the multipath than the p-polarization component. In other words, by reducing the s-polarization component, the occurrence of reflection due to the multipath in the captured image can be suppressed.

As described above, in the case of the cross-polarization imaging or the parallel polarization imaging, the irradiation light from the light emitting unit is polarized in one direction, so that the s-polarized light can be reduced by increasing the p-polarized light. For example, the s-polarization component can be minimized (at least estimated to be minimum) by setting the polarization direction of the irradiation light from the light emitting unit to the vibration direction of the electric field of the p-polarization component. In this manner, a magnitude of the s-polarization component can be controlled by the polarization direction of the irradiation light from the light emitting unit. Therefore, the polarization direction of the irradiation light from the light emitting unit may be set such that the s-polarization component is minimized (or such that the s-polarization component is estimated to be minimum). That is, the polarization direction may be set as the recommended polarization direction.

Then, the direction of the s-polarization component or the p-polarization component (the vibration direction of the electric field) is decided with respect to the incident surface as described above. That is, the direction of these components is decided according to the direction of the specularly reflecting surface. That is, since the electric field vibration direction of the s-polarization component is decided according to the shape of the object (the angle of the specularly reflecting surface in the multipath), the recommended polarization direction may be derived according to the shape of the object.

Note that any method may be used to guide the operation for bringing the polarization direction of the irradiation light emitted from the light emitting unit closer to the recommended polarization direction. For example, in the above-described information processing device, the guide unit may guide the operation by using visual information that is information transmitted by using visual sense, such as an image such as a character, a symbol, or a picture, or light emission (color, luminance, blinking pattern, and the like). Furthermore, in that case, the guide unit may present the visual information for guiding the operation by superimposing it on a taken-in image obtained by the imaging unit. The taken-in image may be an image that is taken-in before the shutter button is operated by the user or the like (before an imaging instruction is input), or may be a captured image obtained by the user or the like operating the shutter button. Furthermore, the taken-in image may be a moving image or a generated image.

Furthermore, the guide unit may guide the operation by using auditory information that is information transmitted by using auditory sense, such as voice or music. Furthermore, the guide unit may guide the operation by using tactile information that is information transmitted by using tactile sense, such as vibration or a shape change.

Furthermore, a current polarization direction of the irradiation light may be detected, and a polarization direction operation direction for guiding the recommended polarization direction from the current polarization direction may be guided. For example, the information processing device may further include a polarization direction detection unit that detects the current polarization direction of the irradiation light. Then, the guide unit may guide the operation for bringing the polarization direction of the irradiation light closer to the recommended polarization direction from the detected current polarization direction.

Note that the above-described information processing device may further include a light emitting unit that emits irradiation light. Furthermore, the above-described information processing device may further include an imaging unit that images the object irradiated with the irradiation light. Furthermore, the above-described information processing device may further include a 3D model generation unit that generates a 3D model of the object by using the captured image generated by imaging by the imaging unit.

<Method 1-1>

As described above, any method may be used to guide the operation for bringing the polarization direction of the irradiation light emitted from the light emitting unit closer to the recommended polarization direction. For example, as indicated in a second row from the top of the table in Fig. 5, the derived recommended polarization direction may be presented (Method 1-1).

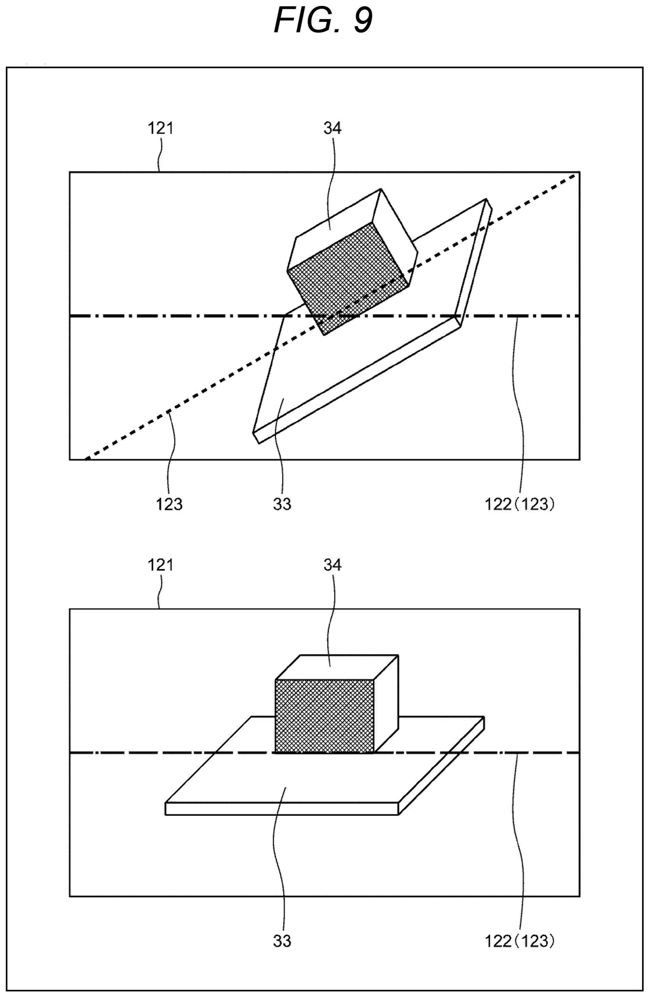

For example, in the above-described information processing device, the guide unit may guide the operation by presenting the recommended polarization direction. For example, in a display unit 121 illustrated on an upper side of Fig. 9, the recommended polarization direction is indicated as a dotted line 123 and the current polarization direction is indicated as a one-dot chain line 122, superimposed on the taken-in image. As illustrated on a lower side of Fig. 9, the current polarization direction (one-dot chain line 122) is operated to coincide with the recommended polarization direction (dotted line 123), whereby occurrence of reflection due to the multipath in the captured image can be suppressed. Therefore, it is possible to suppress the reduction in the accuracy of the matching between the captured images and the reduction in the quality of the texture due to the reflection.

Note that the example of Fig. 9 is an example, and the method for presenting the recommended polarization direction is not limited to this example.

<Method 1-2>

Furthermore, as indicated in a third row from the top of the table in Fig. 5, a method for operating the polarization direction may be presented (Method 1-2).

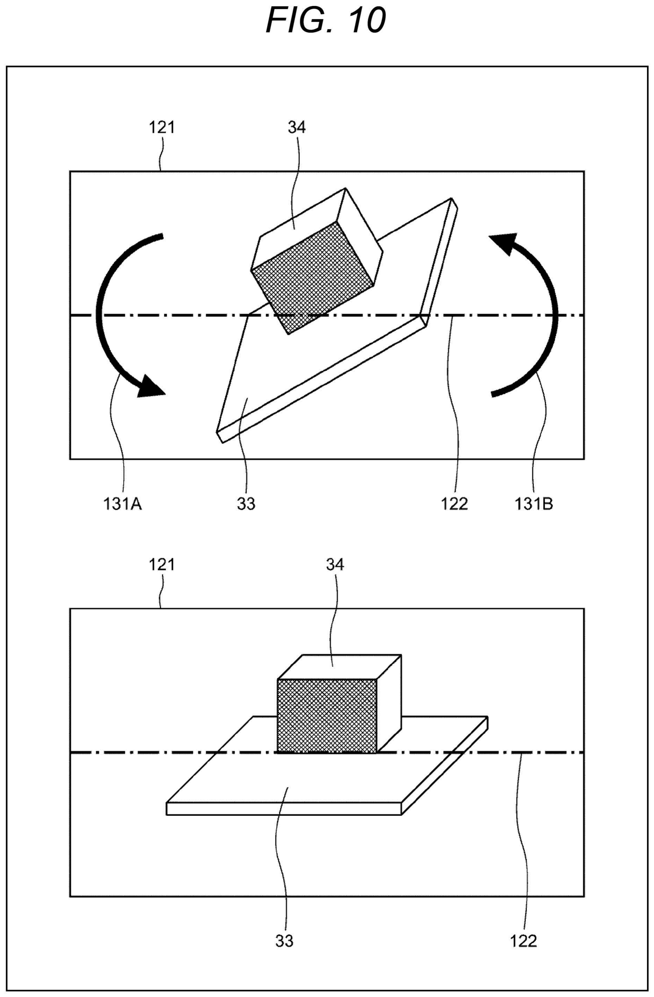

For example, in the above-described information processing device, the guide unit may guide the operation by presenting the operation direction of the polarization direction. For example, in the display unit 121 illustrated on an upper side of Fig. 10, the current polarization direction is indicated as the one-dot chain line 122, and the operation direction of the polarization direction (the operation direction for bringing the current polarization direction closer to the recommended polarization direction) is indicated as an arrow 131A and an arrow 131B, superimposed on the taken-in image. As illustrated on a lower side of Fig. 10, the operation (for example, the light emitting unit (or the imaging device including the light emitting unit) is rotated in this direction) is performed such that the polarization direction (the one-dot chain line 122) changes in the directions of the arrow 131A and the arrow 131B, whereby the occurrence of reflection due to the multipath in the captured image can be suppressed. Therefore, it is possible to suppress the reduction in the accuracy of the matching between the captured images and the reduction in the quality of the texture due to the reflection.

Note that the example of Fig. 10 is an example, and the method for presenting the operation direction of the polarization direction is not limited to this example.

<Method 1-3>

Furthermore, as indicated in a fourth row from the top of the table in Fig. 5, the polarization direction in which the multipath of the s-polarized light is minimized (or estimated to be minimum) may be derived on the basis of the object shape, and set as a target (Method 1-3).

For example, in the above-described information processing device, the recommended polarization direction derivation unit may derive the shape of the object on the basis of a distance to the object, and derive the recommended polarization direction on the basis of the shape of the object.

Any method may be used to derive the recommended polarization direction based on the object shape. For example, the recommended polarization direction derivation unit may generate a normal map that is distribution information of normals of the surface of the object on the basis of the distance to the object, decide representative normals on the basis of the normal map, derive a representative plane on the basis of the representative normals, and derive the recommended polarization direction on the basis of the representative plane.

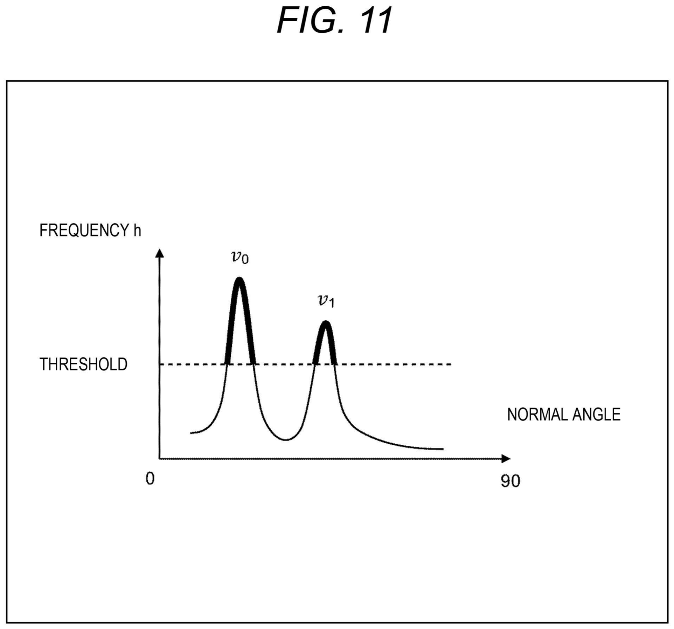

For example, the normal of the surface of the object may be derived on the basis of the distance to the object, and a normal map that is distribution information of the normals may be generated as in a graph illustrated in Fig. 11. A horizontal axis of the graph illustrated in Fig. 11 indicates a normal angle, and a vertical axis indicates a frequency. That is, in the case of the example of Fig. 11, frequencies of normal angles v0 and v1 are outstanding. That is, it is indicated that an area of a plane having this angle as the normal direction is large. For example, the normals of these normal angles may be decided as the representative normals.

Furthermore, for example, as in the following Equations (1) and (2), the top two ($h_0$ normals $n_0$ and $h_1$ normals $n_1$) of angle groups (normal groups) having a frequency higher than a predetermined threshold in this normal map may be obtained, and average values (average angles) of the two normal groups may be used as representative normals ($N_0$, $N_1$). For example, in the case of the example of the graph in Fig. 11, the top two portions (thick line portions) of the portion equal to or more than the threshold indicated by the dotted line may be obtained, and the average values of the respective portions may be used as the representative normals.

[Math. 1]

$$N_0 = \frac{1}{h_0} \sum n_0$$

$$\dots (1)$$

[Math. 2]

$$N_1 = \frac{1}{h_1} \sum n_1$$

$$\dots (2)$$

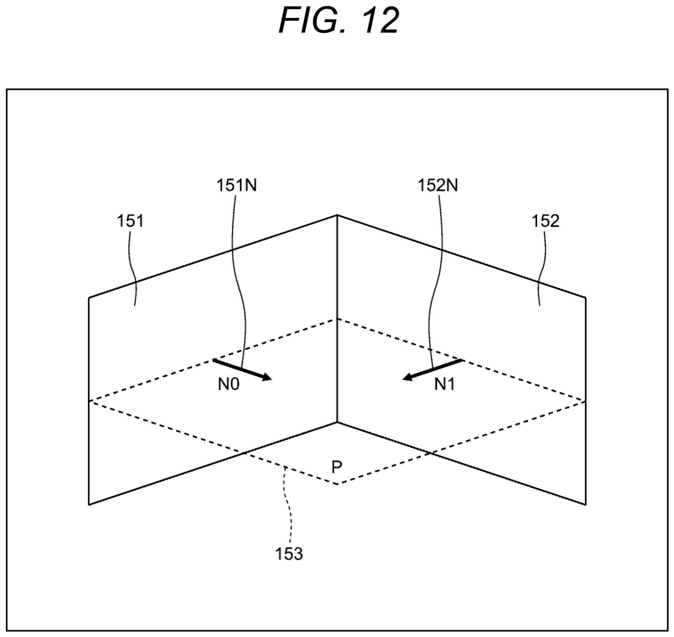

Then, for example, as illustrated in Fig. 12, a plane including these representative normals is derived as a representative plane. In the case of the example of Fig. 12, a normal 151N ($N_0$) of a surface 151 and a normal 152N ($N_1$) of a surface 152 are set as the representative normals, and a plane 153 (P) including these normals is set as the representative plane. For example, a plane P passing through an origin (0,0,0) and stretched by two vectors is calculated from the following Equations (3) to (7).

[Math. 3]

$$N_0 = \left( i_0, j_0, k_0 \right)$$

$$\ldots (3)$$

[Math. 4]

$$N_1 = \left( i_1, j_1, k_1 \right)$$

$$\ldots (4)$$

[Math. 5]

$$x = s \cdot i_0 + t \cdot i_1$$

$$\ldots (5)$$

[Math. 6]

$$y = s \cdot j_0 + t \cdot j_1$$

$$\ldots (6)$$

[Math. 7]

$$z = s \cdot k_0 + t \cdot k_1$$

$$\ldots (7)$$

The plane P is calculated as in the following Equation (8) by solving the above equations.
[Math. 8]

$$P : ax + by + cz = 0$$

$$\ldots (8)$$

The recommended polarization direction is set on the basis of the representative plane derived in this manner. For example, the recommended polarization direction may be set such that the representative plane is the incident surface. That is, in a case where the representative plane is the incident surface, the polarization direction of the irradiation light emitted from the light emitting unit may be "the direction in which the specular reflection component is minimized" or "the direction in which the specular reflection component is estimated to be minimum". In this case, what is presented on a preview screen so that a straight line with z=0 on the plane P plane passes through a center of an image height of the camera is an inclination of a roll axis of the camera, which is the p-polarization direction. By urging a photographer to rotate a camera angle so that a flash polarization direction becomes parallel to the p-polarization direction, it is possible to perform imaging with target p-polarization flash.

Furthermore, the information processing device may further include a distance measurement unit that measures a distance to the object. Then, the recommended polarization direction derivation unit may generate a normal map on the basis of the distance to the object measured by the distance measurement unit.

Note that a method for deriving the above-described representative normal (specularly reflecting surface) is arbitrary, and is not limited to the above-described example. For example, normals of two surfaces that are likely to have the large influence may be selected as the representative normals. For example, two wider surfaces may be the two surfaces that are likely to have the large influence. Furthermore, two surfaces at better positions (for example, in the vicinity of the center or the like) may be the two surfaces that are likely to have the large influence. Furthermore, two surfaces (for example, within 180 degrees (concave shape), within 90 degrees, and the like) having a better angle (positional relationship) may be set as the two surfaces that are likely to have the large influence. Furthermore, the material of the surface may be determined (for example, a surface having high reflectivity or the like). Furthermore, the determination may be made comprehensively by using a plurality of conditions. Furthermore, a plurality of two surfaces (pairs) may be selected (for example, an optimum polarization direction may be comprehensively determined from a relationship of each of the plurality of pairs). In that case, for example, weighting may be performed according to an area, a position, an angle, a material, and the like. Furthermore, a relationship between the shape of the object and the representative normal may be learned, and an appropriate representative normal may be derived from the learning result and the entire shape of the object.

Furthermore, a method for deriving the representative plane described above is arbitrary, and is not limited to the above example. For example, the representative plane may be comprehensively derived from a plurality of two normals (normal pair). Furthermore, at that time, each pair may be weighted. Furthermore, a relationship between the shape of the object and the representative plane may be learned, and an appropriate representative plane may be derived from the learning result and the entire shape of the object.

<Method 1-4>

Furthermore, as indicated in a lowermost row of the table in Fig. 5, a light emission intensity may be controlled on the basis of a subject distance (Method 1-4).

For example, the above-described information processing device may further include a light emission intensity control unit that controls a light emission intensity of the light emitting unit on the basis of the distance to the object. In this way, the occurrence of luminance unevenness (difference in luminance between captured images) can be suppressed, and the reduction in the quality of the texture can be suppressed.

For example, the light emission intensity control unit may reduce the light emission intensity as the distance to the object is shorter. In general, the shorter the distance to the subject, the higher the luminance of the captured image. Therefore, by performing control in this manner, it is possible to suppress occurrence of luminance unevenness (difference in luminance between captured images), and it is possible to suppress reduction in the quality of the texture.

For example, the above-described information processing device may further include a distance measurement unit that measures the distance to the object. Then, the light emission intensity control unit may control the light emission intensity on the basis of the distance to the object measured by the distance measurement unit. In this way, the occurrence of luminance unevenness (difference in luminance between captured images) can be suppressed, and the reduction in the quality of the texture can be suppressed.

<4. First Embodiment>

<Imaging Device>

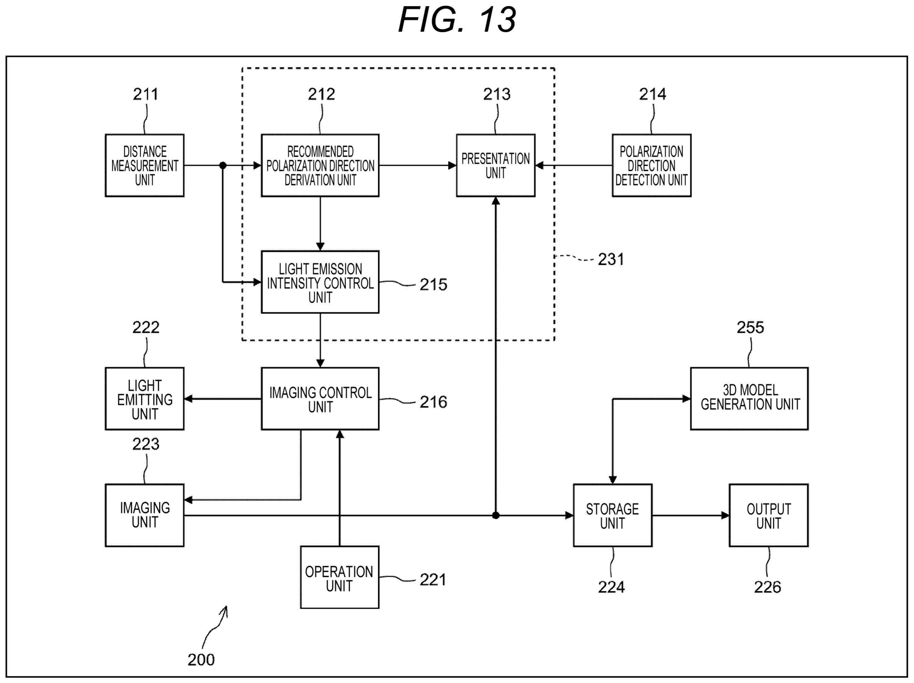

Fig. 13 is a block diagram illustrating a main configuration example of an imaging device which is an embodiment of the information processing device to which the present technology described above in <3. Operation Guidance of Polarization Direction> is applied. An imaging device 200 illustrated in Fig. 13 is a device that images a 3D object to generate a captured image, and generates a 3D model by using the captured image. At that time, the imaging device 200 irradiates the 3D object with irradiation light, and can image the 3D object irradiated with the irradiation light. At that time, the imaging device 200 can polarize the irradiation light in a predetermined first direction. Furthermore, the imaging device 200 can generate a captured image by polarizing light from the 3D object in a predetermined second direction and receiving it. At that time, the imaging device 200 may be able to perform cross-polarization imaging. That is, the first direction and the second direction may be perpendicular to each other. Furthermore, the imaging device 200 may be able to perform parallel polarization imaging. That is, the first direction and the second direction may be parallel to each other.

As described above, the imaging device 200 can apply the present technology described above in <3. Operation Guidance of Polarization Direction>. The imaging device 200 can apply Method 1 described above. Furthermore, the imaging device 200 can apply Method 1-1 described above. Furthermore, the imaging device 200 can apply Method 1-2 described above. Furthermore, the imaging device 200 can apply Method 1-3 described above. Furthermore, the imaging device 200 can apply Method 1-4 described above.

As illustrated in Fig. 13, the imaging device 200 includes a distance measurement unit 211, a recommended polarization direction derivation unit 212, a presentation unit 213, a polarization direction detection unit 214, a light emission intensity control unit 215, an imaging control unit 216, an operation unit 221, a light emitting unit 222, an imaging unit 223, a storage unit 224, a 3D model generation unit 225, and an output unit 226.

The distance measurement unit 211 measures a distance to a subject (3D object) by using, for example, light detection and ranging (LiDAR), infrared rays, or the like, and supplies the measurement result (information indicating the distance to the subject) to the recommended polarization direction derivation unit 212 and the light emission intensity control unit 215. The distance measurement method used by the distance measurement unit 211 may be any method.

The recommended polarization direction derivation unit 212 derives a recommended polarization direction on the basis of the information indicating the distance to the subject supplied from the distance measurement unit 211, and supplies the recommended polarization direction to the presentation unit 213. That is, the recommended polarization direction derivation unit 212 may derive the recommended polarization direction of the irradiation light emitted from the light emitting unit 222 according to the shape of the object in the three-dimensional space at the time of polarization imaging.

At that time, for example, a polarization direction in which a specular reflection component of a multipath detected by the imaging unit 223 is minimized (or estimated to be minimum) may be set as the recommended polarization direction. Furthermore, in that case, the recommended polarization direction may be a direction in which an s-polarization component of the specular reflection component of the multipath detected by the imaging unit 223, in which a vibration direction of an electric field when reflected from the surface of the object is perpendicular to the incident surface, is minimized (or direction estimated to be minimum).

The presentation unit 213 presents guidance regarding an operation of the polarization direction on the basis of the supplied recommended polarization direction. For example, the presentation unit 213 may guide an operation for bringing a polarization direction of the irradiation light closer to the recommended polarization direction. Therefore, the presentation unit 213 can also be referred to as a guide unit.

For example, visual information may be used to guide the operation. Furthermore, in that case, the presentation unit 213 may present visual information for guiding the operation by superimposing it on the taken-in image obtained by the imaging unit 223. Furthermore, the presentation unit 213 may guide the operation by using auditory information. Furthermore, the presentation unit 213 may guide the operation by using tactile information. Furthermore, the presentation unit 213 may guide an operation for bringing a current polarization direction of the light emitting unit 222 detected by the polarization direction detection unit 214 closer to the recommended polarization direction. Furthermore, the presentation unit 213 may present the recommended polarization direction. Furthermore, the presentation unit 213 may present the operation direction of the polarization direction.

The polarization direction detection unit 214 detects a current polarization direction of the light emitting unit 222 and supplies the detection result (information indicating the current polarization direction) to the presentation unit 213.

The light emission intensity control unit 215 controls a light emission intensity of the light emitting unit 222 on the basis of the information indicating the distance to the subject supplied from the distance measurement unit 211. For example, the light emission intensity control unit 215 may reduce the light emission intensity as the distance to the object is shorter. The light emission intensity control unit 215 supplies the control information to the imaging control unit 216.

The imaging control unit 216 controls the light emitting unit 222 and the imaging unit 223 to execute cross-polarization imaging, parallel polarization imaging, and the like. For example, the imaging control unit 216 causes the light emitting unit 222 to emit light, controls the imaging unit 223, and causes the 3D object irradiated with the irradiation light to be imaged. At that time, the imaging control unit 216 may control the light emission intensity of the light emitting unit 222 according to the control of the light emission intensity control unit 215. That is, the imaging control unit 216 may control the light emitting unit 222 to emit light with the light emission intensity set by the light emission intensity control unit 215. Furthermore, the imaging control unit 216 may control the imaging as described above in accordance with an instruction (for example, an imaging instruction or the like) supplied from the operation unit 221.

The operation unit 221 receives an instruction from a user or the like, for example, an imaging instruction. The light emitting unit 222 includes a light emitting device and emits light according to the control of the imaging control unit 216. The imaging unit 223 includes an imaging element, images a subject, generates a captured image (or a taken-in image), and supplies the captured image to the storage unit 224 and the presentation unit 213 under the control of the imaging control unit 216.

The storage unit 224 has a storage medium and stores data of the captured image supplied from the imaging unit 223 and data of the 3D model generated by the 3D model generation unit 225. The 3D model generation unit 225 generates a 3D model from the captured image stored in the storage unit 224 by using, for example, a method such as photogrammetry. The 3D model generation unit 225 supplies the data of the generated 3D model to the storage unit 224 and stores the data. The output unit 226 reads the captured image and the data of the 3D model stored in the storage unit 224, and outputs it to the outside of the imaging device 200.

Note that the recommended polarization direction derivation unit 212, the presentation unit 213, and the light emission intensity control unit 215 indicated by a dotted frame 231 may be one information processing device to which the present technology can be applied. Other configurations (processing units) may be provided separately or may be omitted. Furthermore, in a case where the light emission intensity is not controlled, the light emission intensity control unit 215 may be omitted.

<Recommended Polarization Direction Derivation Unit>

The recommended polarization direction derivation unit 212 may derive a shape of the object on the basis of a distance to the object, and derive a recommended polarization direction on the basis of the shape of the object. For example, the recommended polarization direction derivation unit 212 may generate a normal map that is distribution information of normals of the surface of the object on the basis of the distance to the object, decide representative normals on the basis of the normal map, derive a representative plane on the basis of the representative normals, and derive a recommended polarization direction on the basis of the representative plane.

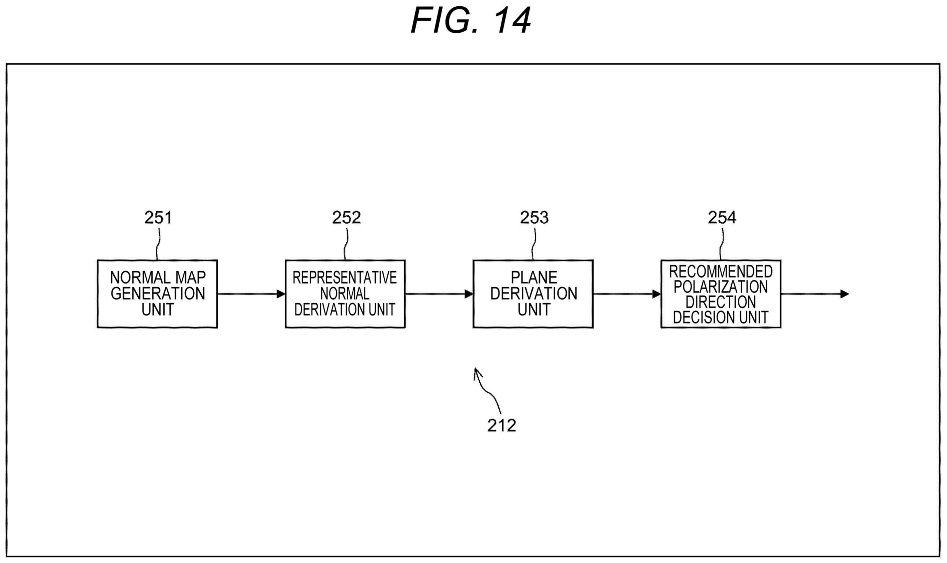

Fig. 14 is a block diagram illustrating a main configuration example of the recommended polarization direction derivation unit 212 in Fig. 13. As illustrated in Fig. 14, the recommended polarization direction derivation unit 212 includes a normal map generation unit 251, a representative normal derivation unit 252, a plane derivation unit 253, and a recommended polarization direction decision unit 254.

The normal map generation unit 251 generates a normal map on the basis of the information indicating the distance to the subject and supplies the normal map to the representative normal derivation unit 252. The representative normal derivation unit 252 derives representative normals on the basis of the normal map and supplies the representative normals to the plane derivation unit 253. The plane derivation unit 253 derives a representative plane on the basis of the representative normals, and supplies the representative plane to the recommended polarization direction decision unit 254. The recommended polarization direction decision unit 254 decides a recommended polarization direction on the basis of the representative plane, and supplies the recommended polarization direction to the presentation unit 213.

That is, each processing unit of the recommended polarization direction derivation unit 212 can execute each processing as described above in <Method 1-3>.

With the above configuration, the imaging device 200 can further suppress the occurrence of the reflection due to the multipath in the captured image. Therefore, the imaging device 200 can further suppress the reduction in the accuracy of the matching between the captured images and the reduction in the quality of the texture due to the reflection. Furthermore, the imaging device 200 can suppress the occurrence of the luminance unevenness, and can suppress the reduction in the quality of the texture.

<Flow of Imaging Processing>

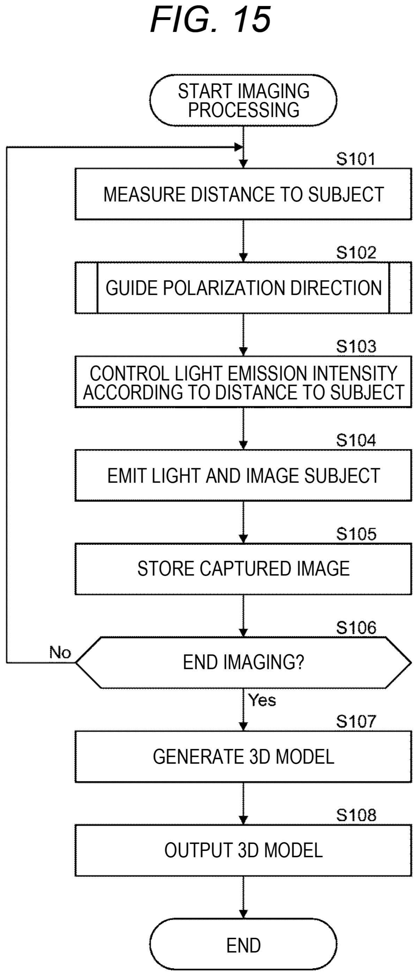

An example of a flow of imaging processing executed by the imaging device 200 will be described with reference to a flowchart in Fig. 15.

When the imaging processing is started, in step S101, the distance measurement unit 211 of the imaging device 200 measures a distance to a subject.

In step S102, the recommended polarization direction derivation unit 212 and the presentation unit 213 execute polarization direction guidance processing and guide a polarization direction.

In step S103, the light emission intensity control unit 215 controls a light emission intensity according to the distance to the subject.

In step S104, the light emitting unit 222 emits light according to the control of the imaging control unit 216. The imaging unit 223 images the subject under the control of the imaging control unit 216.

In step S105, the storage unit 224 stores data of the captured image generated by the processing in step S104.

In step S106, the imaging control unit 216 determines whether or not to end the imaging. In a case where it is determined not to end the imaging, the processing returns to step S101, and the subsequent processing is repeated. In a case where each processing of steps S101 to S106 is repeatedly executed and it is determined in step S106 to end the imaging, the processing proceeds to step S107.

In step S107, the 3D model generation unit 225 generates a 3D model by a method such as photogrammetry by using the captured image stored in step S105.

In step S108, the output unit 226 outputs data of the 3D model generated in step S107.

When the processing of step S108 ends, the imaging processing ends.

<Flow of Polarization Direction Guidance Processing>

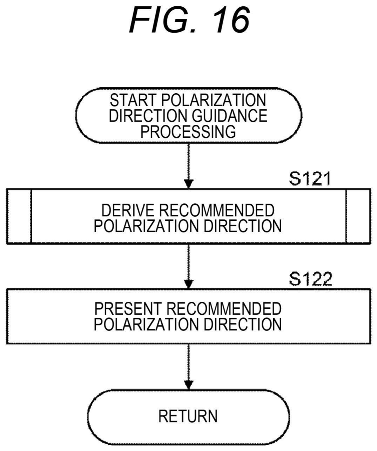

For example, the presentation unit 213 may guide an operation for bringing a polarization direction of irradiation light closer to a recommended polarization direction by presenting the recommended polarization direction. An example of a flow of polarization direction guidance processing executed in step S102 of Fig. 15 in this case will be described with reference to a flowchart in Fig. 16.

When the polarization direction guidance processing is started, in step S121, the recommended polarization direction derivation unit 212 executes recommended polarization direction derivation processing, and derives the recommended polarization direction on the basis of the distance to the subject.

In step S122, the presentation unit 213 presents the derived recommended polarization direction.

When the processing in step S122 ends, the polarization direction guidance processing ends, and the processing returns to Fig. 15.

<Flow of Recommended Polarization Direction Derivation Processing>

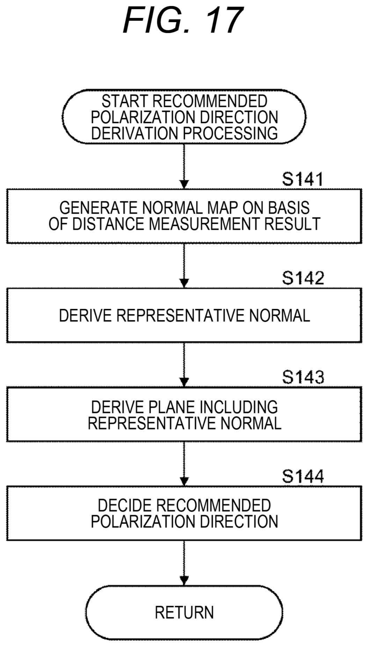

Next, an example of a flow of the recommended polarization direction derivation processing executed in step S121 of Fig. 16 will be described with reference to a flowchart in Fig. 17.

When the recommended polarization direction derivation processing is started, in step S141, the normal map generation unit 251 of the recommended polarization direction derivation unit 212 generates a normal map on the basis of distance measurement result.

In step S142, the representative normal derivation unit 252 derives representative normals by using the normal map.

In step S143, the plane derivation unit 253 derives a representative plane on the basis of the representative normals.

In step S144, the recommended polarization direction decision unit 254 decides a recommended polarization direction on the basis of the representative plane.

When the processing in step S144 ends, the processing returns to Fig. 16.

<Flow of Polarization Direction Guidance Processing>

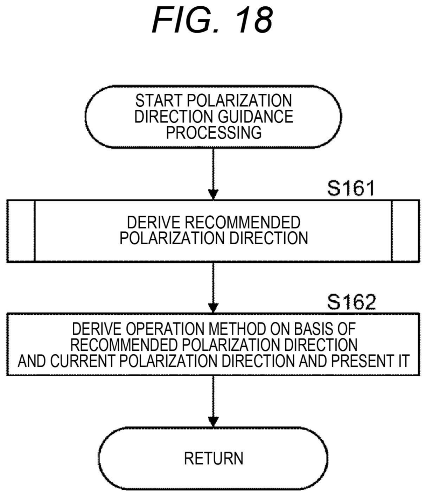

Furthermore, for example, the presentation unit 213 may guide an operation for bringing a polarization direction of irradiation light closer to the recommended polarization direction by presenting an operation direction of the polarization direction. An example of a flow of the polarization direction guidance processing executed in step S102 of Fig. 15 in this case will be described with reference to a flowchart in Fig. 18.

When the polarization direction guidance processing is started, in step S161, the recommended polarization direction derivation unit 212 executes recommended polarization direction derivation processing, and derives a recommended polarization direction on the basis of a distance to a subject. This processing is executed in a similar flow to the case described with reference to the flowchart in Fig. 17.

In step S162, the presentation unit 213 derives an operation method on the basis of the derived recommended polarization direction and the current polarization direction, and presents it.

When the processing in step S162 ends, the polarization direction guidance processing ends, and the processing returns to Fig. 15.

By executing each processing as described above, the imaging device 200 can further suppress the occurrence of the reflection due to the multipath in the captured image. Therefore, the imaging device 200 can further suppress the reduction in the accuracy of the matching between the captured images and the reduction in the quality of the texture due to the reflection. Furthermore, the imaging device 200 can suppress the occurrence of the luminance unevenness, and can suppress the reduction in the quality of the texture.

<5. Supplementary Note>

<Computer>

The above-described series of processing can be executed by hardware or software. In a case where the series of processing is executed by the software, a program that forms the software is installed in a computer. Here, examples of the computer include a computer incorporated in dedicated hardware, for example, a general-purpose personal computer capable of executing various functions by installing various programs, and the like.

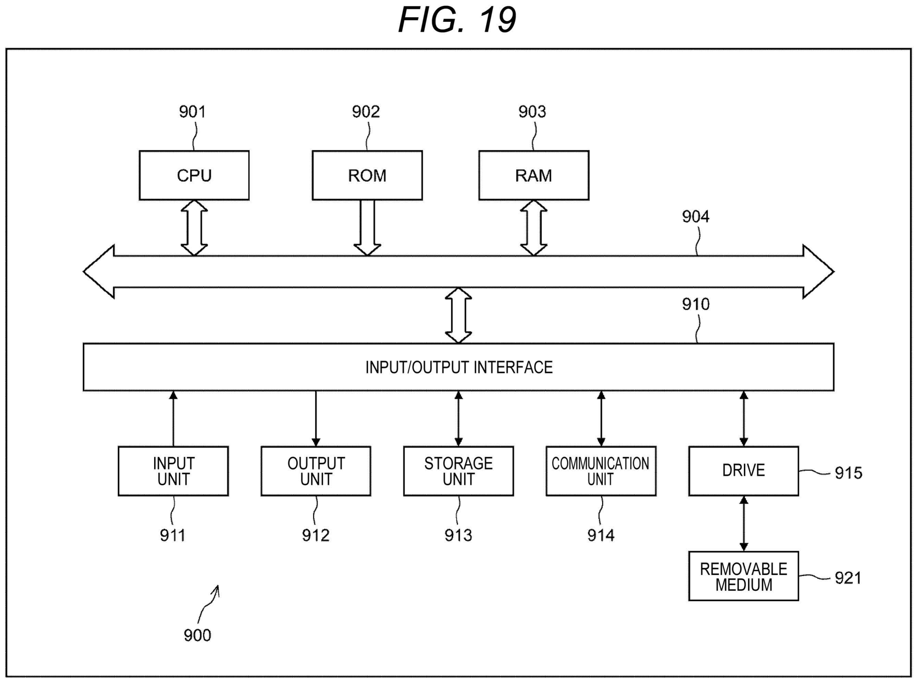

Fig. 19 is a block diagram illustrating a configuration example of hardware of a computer that executes the above-described series of processing in accordance with a program.

In a computer 900 illustrated in Fig. 19, a central processing unit (CPU) 901, a read only memory (ROM) 902, and a random access memory (RAM) 903 are mutually connected via a bus 904.

Furthermore, an input/output interface 910 is also connected to the bus 904. To the input/output interface 910, an input unit 911, an output unit 912, a storage unit 913, a communication unit 914, and a drive 915 are connected.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, whereby the above-described series of processing is performed. The RAM 903 also appropriately stores data and the like necessary for the CPU 901 to execute various types of processing.

A program executed by the computer can be applied by being recorded on the removable medium 921 as a package medium, or the like, for example. In this case, by attaching the removable medium 921 to the drive 915, the program can be installed in the storage unit 913 via the input/output interface 910.

Furthermore, this program can also be provided via a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

<Applicable Target of Present Technology>

The present technology may be applied to an arbitrary configuration. For example, the present technology may be applied to various electronic equipment.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing where a plurality of devices shares and jointly executes processing over a network. For example, the present technology may be implemented in a cloud service that provides a service related to an image (moving image) to an arbitrary terminal such as a computer, audio visual (AV) equipment, a portable information processing terminal, or an Internet of Things (IoT) device.

Note that in the present specification, a system means a set of a plurality of components (devices, modules (parts), and the like), and it does not matter whether or not all the components are in the same housing. Therefore, a plurality of devices stored in different housings and connected via a network and one device in which a plurality of modules is stored in one housing are both systems.

<Field and Application to Which Present Technology is Applicable>

The system, device, processing unit, and the like to which the present technology is applied can be used in an arbitrary field such as traffic, medical care, crime prevention, agriculture, livestock farming, mining, beauty care, factory, home appliance, weather, and natural surveillance, for example. Furthermore, application thereof is also arbitrary.

<Others>

Embodiments of the present technology are not limited to the embodiments described above, and various modifications can be made without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the above-described programs may be executed in an arbitrary device. In this case, the device is only required to have a necessary function (functional block and the like) and obtain necessary information.

Furthermore, for example, each step in one flowchart may be executed by one device, or may be shared and executed by a plurality of devices. Moreover, in a case where a plurality of pieces of processing is included in one step, the plurality of pieces of processing may be executed by one device, or may be shared and executed by a plurality of devices. In other words, the plurality of pieces of processing included in one step can also be executed as pieces of processing of a plurality of steps. Conversely, the processing described as the plurality of the steps can also be collectively executed as one step.

Furthermore, for example, in a program executed by the computer, the pieces of processing of steps describing the program may be executed in a time-series order in the order described in the present specification, or may be executed individually at a required timing such as when a call is made. That is, the pieces of processing of the respective steps may be executed in an order different from the above-described order as long as there is no contradiction. Moreover, the pieces of processing of the steps describing the program may be executed in parallel with processing of another program, or may be executed in combination with processing of the other program.

Furthermore, for example, a plurality of technical elements included in the present technology can be implemented independently as a single entity as long as there is no contradiction. It goes without saying that arbitrary plurality of present technical elements can be implemented in combination. For example, a part or all of the present technologies described in any of the embodiments can be implemented in combination with a part or all of the present technologies described in other embodiments. Furthermore, a part or all of the above-described arbitrary present technologies can be implemented together with another technology that is not described above.

Note that the present technology may also provide the following configurations.

(1) An information processing device including:

a recommended polarization direction derivation unit configured to derive a recommended polarization direction of irradiation light emitted from a light emitting unit according to a shape of an object in a three-dimensional space at a time of polarization imaging; and
a guide unit configured to guide an operation for bringing a polarization direction of the irradiation light closer to the recommended polarization direction, in which
the polarization imaging is an imaging method in which the object irradiated with the irradiation light polarized in a first direction is imaged by an imaging unit via a configuration that polarizes in a second direction,
the second direction is a direction orthogonal to the first direction or a direction parallel to the first direction, and
the recommended polarization direction is a direction in which a specular reflection component of the irradiation light, which is specularly reflected on a plurality of surfaces of the object and incident on the imaging unit, is at least equal to or less than an average.

(2) The information processing device according to (1), in which
the guide unit guides the operation by presenting the recommended polarization direction.
(3) The information processing device according to (1), in which
the guide unit guides the operation by presenting an operation direction of the polarization direction.
(4) The information processing device according to any one of (1) to (3), in which
the guide unit guides the operation by using visual information.
(5) The information processing device according to (4), in which
the guide unit presents the visual information for guiding the operation by superimposing it on a taken-in image obtained by the imaging unit.

(6) The information processing device according to any one of (1) to (5), in which
the guide unit guides the operation by using auditory information.

(7) The information processing device according to any one of (1) to (6), in which
the guide unit guides the operation by using tactile information.

(8) The information processing device according to any one of (1) to (7), further including:

> a polarization direction detection unit configured to detect a current polarization direction of the irradiation light, in which
> the guide unit guides the operation for bringing the polarization direction of the irradiation light closer to the recommended polarization direction from the detected current polarization direction.

(9) The information processing device according to any one of (1) to (8), in which
the recommended polarization direction is a direction in which the specular reflection component is estimated to be minimum.

(10) The information processing device according to (9), in which
the recommended polarization direction is a direction in which an s-polarization component of the specular reflection component, in which a vibration direction of an electric field when reflected from a surface of the object is perpendicular to an incident surface, is estimated to be minimum.

(11) The information processing device according to (10), in which
the recommended polarization direction derivation unit derives a shape of the object on the basis of a distance to the object, and derives the recommended polarization direction on the basis of the shape of the object.

(12) The information processing device according to (11), in which
the recommended polarization direction derivation unit generates a normal map that is distribution information of normals of the surface of the object on the basis of the distance to the object, decides representative normals on the basis of the normal map, derives a representative plane on the basis of the representative normals, and derives the recommended polarization direction on the basis of the representative plane.

(13) The information processing device according to (12), further including:

> a distance measurement unit configured to measure the distance to the object, in which
> the recommended polarization direction derivation unit generates the normal map on the basis of the distance to the object measured by the distance measurement unit.

(14) The information processing device according to any one of (1) to (13), further including:
a light emission intensity control unit configured to control a light emission intensity of the light emitting unit on the basis of a distance to the object.

(15) The information processing device according to (14), in which
the light emission intensity control unit reduces the light emission intensity as the distance to the object is shorter.

(16) The information processing device according to (14) or (15), further including:

> a distance measurement unit configured to measure the distance to the object, in which
> the light emission intensity control unit controls the light emission intensity on the basis of the distance to the object measured by the distance measurement unit.

(17) The information processing device according to any one of (1) to (16), further including:
the light emitting unit.

(18) The information processing device according to any one of (1) to (17), further including:
the imaging unit.

(19) The information processing device according to any one of (1) to (18), further including:
a 3D model generation unit configured to generate a 3D model of the object by using a captured image captured and generated by the imaging unit.

(20) An information processing method including:

> deriving a recommended polarization direction of irradiation light emitted from a light emitting unit according to a shape of an object in a three-dimensional space at a time of polarization imaging; and
> guiding an operation for bringing a polarization direction of the irradiation light closer to the recommended polarization direction, in which
> the polarization imaging is an imaging method in which the object irradiated with the irradiation light polarized in a first direction is imaged by an imaging unit via a configuration that polarizes in a second direction,
> the second direction is a direction orthogonal to the first direction or a direction parallel to the first direction, and
> the recommended polarization direction is a direction in which a specular reflection component of the irradiation light, which is specularly reflected on a plurality of surfaces of the object and incident on the imaging unit, is at least equal to or less than an average.

REFERENCE SIGNS LIST

| 200 | Imaging device |
| 211 | Distance measurement unit |
| 212 | Recommended polarization direction derivation unit |
| 213 | Presentation unit |
| 214 | Polarization direction detection unit |
| 215 | Light emission intensity control unit |
| 216 | Imaging control unit |
| 221 | Operation unit |
| 222 | Light emitting unit |
| 223 | Imaging unit |
| 224 | Storage unit |
| 225 | 3D model generation unit |
| 226 | Output unit |
| 251 | Normal map generation unit |
| 252 | Representative normal derivation unit |
| 253 | Plane derivation unit |
| 254 | Recommended polarization direction decision unit |
| 900 | Computer |

**Claims**

1. An information processing device comprising:

   a recommended polarization direction derivation unit configured to derive a recommended polarization direction of irradiation light emitted from a light emitting unit according to a shape of an object in a three-dimensional space at a time of polarization imaging; and
   a guide unit configured to guide an operation for bringing a polarization direction of the irradiation light closer to the recommended polarization direction, wherein
   the polarization imaging is an imaging method in which the object irradiated with the irradiation light polarized in a first direction is imaged by an imaging unit via a configuration that polarizes in a second direction,
   the second direction is a direction orthogonal to the first direction or a direction parallel to the first direction, and
   the recommended polarization direction is a direction in which a specular reflection component of the irradiation light, which is specularly reflected on a plurality of surfaces of the object and incident on the imaging unit, is at least equal to or less than an average.

2. The information processing device according to claim 1, wherein
   the guide unit guides the operation by presenting the recommended polarization direction.

3. The information processing device according to claim 1, wherein
   the guide unit guides the operation by presenting an operation direction of the polarization direction.

4. The information processing device according to claim 1, wherein
   the guide unit guides the operation by using visual information.

5. The information processing device according to claim 4, wherein
   the guide unit presents the visual information for guiding the operation by superimposing it on a taken-in image obtained by the imaging unit.

6. The information processing device according to claim 1, wherein
   the guide unit guides the operation by using auditory information.

7. The information processing device according to claim 1, wherein
   the guide unit guides the operation by using tactile information.

8. The information processing device according to claim 1, further comprising:

   a polarization direction detection unit configured to detect a current polarization direction of the irradiation light, wherein
   the guide unit guides the operation for bringing the polarization direction of the irradiation light closer to the recommended polarization direction from the detected current polarization direction.

9. The information processing device according to claim 1, wherein
   the recommended polarization direction is a direction in which the specular reflection component is estimated to be minimum.

10. The information processing device according to claim 9, wherein
    the recommended polarization direction is a direction in which an s-polarization component of the specular reflection component, in which a vibration direction of an electric field when reflected from a surface of the object is perpendicular to an incident surface, is estimated to be minimum.

11. The information processing device according to claim 10, wherein
    the recommended polarization direction derivation unit derives a shape of the object on a basis of a distance to the object, and derives the recommended polarization direction on a basis of the shape of the object.

12. The information processing device according to claim 11, wherein
the recommended polarization direction derivation unit generates a normal map that is distribution information of normals of the surface of the object on a basis of the distance to the object, decides representative normals on a basis of the normal map, derives a representative plane on a basis of the representative normals, and derives the recommended polarization direction on a basis of the representative plane.

13. The information processing device according to claim 12, further comprising:

a distance measurement unit configured to measure the distance to the object, wherein the recommended polarization direction derivation unit generates the normal map on a basis of the distance to the object measured by the distance measurement unit.

14. The information processing device according to claim 1, further comprising:
a light emission intensity control unit configured to control a light emission intensity of the light emitting unit on a basis of a distance to the object.

15. The information processing device according to claim 14, wherein
the light emission intensity control unit reduces the light emission intensity as the distance to the object is shorter.

16. The information processing device according to claim 14, further comprising:

a distance measurement unit configured to measure the distance to the object, wherein the light emission intensity control unit controls the light emission intensity on a basis of the distance to the object measured by the distance measurement unit.

17. The information processing device according to claim 1, further comprising:
the light emitting unit.

18. The information processing device according to claim 1, further comprising:
the imaging unit.

19. The information processing device according to claim 1, further comprising:
a 3D model generation unit configured to generate a 3D model of the object by using a captured image captured and generated by the imaging unit.

20. An information processing method comprising:

deriving a recommended polarization direction of irradiation light emitted from a light emitting unit according to a shape of an object in a three-dimensional space at a time of polarization imaging; and
guiding an operation for bringing a polarization direction of the irradiation light closer to the recommended polarization direction, wherein
the polarization imaging is an imaging method in which the object irradiated with the irradiation light polarized in a first direction is imaged by an imaging unit via a configuration that polarizes in a second direction,
the second direction is a direction orthogonal to the first direction or a direction parallel to the first direction, and
the recommended polarization direction is a direction in which a specular reflection component of the irradiation light, which is specularly reflected on a plurality of surfaces of the object and incident on the imaging unit, is at least equal to or less than an average.

# FIG. 1

11-4     11-3

10

Sfm+MVS+Meshing

15

11-5     11-2

11-1

FIG. 2

# FIG. 3

EP 4 708 892 A1

# FIG. 4

21

## FIG. 5

| METHOD 1 | POLARIZATION DIRECTION OPERATION IS GUIDED SO THAT MULTIPATH OF S-POLARIZED LIGHT IS REDUCED ON BASIS OF SHAPE OF SUBJECT |
|---|---|
| METHOD 1-1 | RECOMMENDED POLARIZATION DIRECTION IS PRESENTED |
| METHOD 1-2 | METHOD FOR OPERATING POLARIZATION DIRECTION IS PRESENTED |
| METHOD 1-3 | POLARIZATION DIRECTION IN WHICH MULTIPATH OF s-POLARIZED LIGHT IS MINIMIZED IS DERIVED ON BASIS OF OBJECT SHAPE AND SET AS TARGET |
| METHOD 1-4 | LIGHT EMISSION INTENSITY IS CONTROLLED ON BASIS OF SUBJECT DISTANCE |

# FIG. 6

s-POLARIZED
LIGHT

INCIDENT
LIGHT

REFLECTED
LIGHT

$\theta$    $\theta$

POLARIZATION IN WHICH VIBRATION OF ELECTRIC FIELD IS PERPENDICULAR
TO PLANE (DRAWING) WHERE 'TWO STRAIGHT LINES' OF INCIDENT LIGHT
AND REFLECTED LIGHT EXIST

p-POLARIZED
LIGHT

INCIDENT
LIGHT

REFLECTED
LIGHT

$\theta$    $\theta$

POLARIZATION IN WHICH VIBRATION OF ELECTRIC FIELD IS PARALLEL
TO PLANE (DRAWING) WHERE 'TWO STRAIGHT LINES' OF INCIDENT LIGHT
AND REFLECTED LIGHT EXIST

# FIG. 7

# FIG. 8

# FIG. 9

# FIG. 10

# FIG. 11

FREQUENCY h

$v_0$

$v_1$

THRESHOLD

NORMAL ANGLE

0

90

# FIG. 12

## FIG. 13

EP 4 708 892 A1

# FIG. 14

# FIG. 15

```
          ┌─────────────────────┐
          │   START IMAGING     │
          │     PROCESSING      │
          └─────────────────────┘
                     │
       ┌─────────────┤
       │             ▼                        S101
       │  ┌──────────────────────────────────┐
       │  │   MEASURE DISTANCE TO SUBJECT    │
       │  └──────────────────────────────────┘
       │             │                        S102
       │             ▼
       │  ┌──────────────────────────────────┐
       │  │ │  GUIDE POLARIZATION DIRECTION │ │
       │  └──────────────────────────────────┘
       │             │                        S103
       │             ▼
       │  ┌──────────────────────────────────┐
       │  │ CONTROL LIGHT EMISSION INTENSITY │
       │  │  ACCORDING TO DISTANCE TO SUBJECT│
       │  └──────────────────────────────────┘
       │             │                        S104
       │             ▼
       │  ┌──────────────────────────────────┐
       │  │    EMIT LIGHT AND IMAGE SUBJECT  │
       │  └──────────────────────────────────┘
       │             │                        S105
       │             ▼
       │  ┌──────────────────────────────────┐
       │  │       STORE CAPTURED IMAGE       │
       │  └──────────────────────────────────┘
       │             │                        S106
       │   No        ▼
       └─────────< END IMAGING? >
                     │ Yes
                     ▼                        S107
          ┌──────────────────────────────────┐
          │         GENERATE 3D MODEL        │
          └──────────────────────────────────┘
                     │                        S108
                     ▼
          ┌──────────────────────────────────┐
          │          OUTPUT 3D MODEL         │
          └──────────────────────────────────┘
                     │
                     ▼
          ┌─────────────────────┐
          │         END         │
          └─────────────────────┘
```

# FIG. 16

```
        ┌──────────────────────┐
        │  START POLARIZATION  │
        │  DIRECTION GUIDANCE  │
        │     PROCESSING       │
        └──────────┬───────────┘
                   │
                   ▼                     S121
   ┌─┌───────────────────────────────┐─┐
   │ │    DERIVE RECOMMENDED         │ │
   │ │    POLARIZATION DIRECTION     │ │
   └─└───────────────────────────────┘─┘
                   │
                   ▼                     S122
     ┌─────────────────────────────────┐
     │      PRESENT RECOMMENDED        │
     │      POLARIZATION DIRECTION     │
     └─────────────────────────────────┘
                   │
                   ▼
        ┌──────────────────────┐
        │        RETURN        │
        └──────────────────────┘
```

# FIG. 17

```
┌─────────────────────────────┐
│    START RECOMMENDED        │
│    POLARIZATION DIRECTION   │
│    DERIVATION PROCESSING    │
└─────────────────────────────┘
              │
              ▼                    S141
┌─────────────────────────────┐
│   GENERATE NORMAL MAP ON BASIS │
│  OF DISTANCE MEASUREMENT RESULT │
└─────────────────────────────┘
              │
              ▼                    S142
┌─────────────────────────────┐
│   DERIVE REPRESENTATIVE NORMAL │
└─────────────────────────────┘
              │
              ▼                    S143
┌─────────────────────────────┐
│     DERIVE PLANE INCLUDING     │
│     REPRESENTATIVE NORMAL      │
└─────────────────────────────┘
              │
              ▼                    S144
┌─────────────────────────────┐
│     DECIDE RECOMMENDED         │
│     POLARIZATION DIRECTION     │
└─────────────────────────────┘
              │
              ▼
      ┌───────────────┐
      │    RETURN      │
      └───────────────┘
```

# FIG. 18

```
     ┌──────────────────────────┐
     │    START POLARIZATION     │
     │   DIRECTION GUIDANCE      │
     │      PROCESSING           │
     └──────────────────────────┘
                  │
                  ▼                        S161
  ┌─────────────────────────────────────────┐
  │         DERIVE RECOMMENDED               │
  │        POLARIZATION DIRECTION            │
  └─────────────────────────────────────────┘
                  │
                  ▼                        S162
  ┌─────────────────────────────────────────┐
  │  DERIVE OPERATION METHOD ON BASIS OF     │
  │    RECOMMENDED POLARIZATION DIRECTION    │
  │ AND CURRENT POLARIZATION DIRECTION AND   │
  │              PRESENT IT                  │
  └─────────────────────────────────────────┘
                  │
                  ▼
            ┌──────────────┐
            │    RETURN     │
            └──────────────┘
```

# FIG. 19

EP 4 708 892 A1

## INTERNATIONAL SEARCH REPORT

| International application No. |
| --- |
| **PCT/JP2024/014971** |

| A. | CLASSIFICATION OF SUBJECT MATTER |
| --- | --- |

*H04N 23/60*(2023.01)i; *G01B 11/00*(2006.01)i; *G01B 11/24*(2006.01)i; *G01C 3/06*(2006.01)i; *H04N 23/55*(2023.01)i; *H04N 23/56*(2023.01)i; *H04N 23/74*(2023.01)i
FI: H04N23/60 100; H04N23/55; H04N23/74; H04N23/56; H04N23/60 500; G01C3/06 120R; G01B11/00 H; G01B11/24 K

According to International Patent Classification (IPC) or to both national classification and IPC

| B. | FIELDS SEARCHED |
| --- | --- |

Minimum documentation searched (classification system followed by classification symbols)

H04N23/60; G01B11/00; G01B11/24; G01C3/06; H04N23/55; H04N23/56; H04N23/74

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/014370 A1 (SONY GROUP CORPORATION) 20 January 2022 (2022-01-20) paragraphs [0036]-[0038], [0054], [0068]-[0070], [0076], [0081], [0115]-[0127], fig. 2-5, fig. 14 | 1-20 |
| A | US 8797534 B2 (KLA-TENCOR CORPORATION) 05 August 2014 (2014-08-05) entire text, all drawings | 1-20 |
| A | CN 111818251 A (OCEAN UNIVERSITY OF CHINA) 23 October 2020 (2020-10-23) entire text, all drawings | 1-20 |
| A | KR 2016-0096494 A (KOREA UNIVERSITY RESEARCH AND BUSINESS FOUNDATION) 16 August 2016 (2016-08-16) entire text, all drawings | 1-20 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 June 2024** | **25 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**EP 4 708 892 A1**

**INTERNATIONAL SEARCH REPORT**
Information on patent family members

International application No.

**PCT/JP2024/014971**

| Patent document cited in search report | | | Publication date (day/month/year) | Patent family member(s) | | | Publication date (day/month/year) |
|---|---|---|---|---|---|---|---|
| WO | 2022/014370 | A1 | 20 January 2022 | US | 2023/0288622 | A1 | |
| | | | | paragraphs [0056]-[0059], [0077], [0092]-[0095], [0102], [0107], [0146]-[0159], fig. 2-5, 14 | | | |
| | | | | EP | 4184909 | A1 | |
| | | | | CN | 115804100 | A | |
| | | | | KR | 10-2023-0038454 | A | |
| US | 8797534 | B2 | 05 August 2014 | WO | 2012/177404 | A2 | |
| | | | | TW | 201300753 | A | |
| CN | 111818251 | A | 23 October 2020 | (Family: none) | | | |
| KR | 2016-0096494 | A | 16 August 2016 | WO | 2016/126134 | A1 | |

Form PCT/ISA/210 (patent family annex) (July 2022)

38

**REFERENCES CITED IN THE DESCRIPTION**

**Patent documents cited in the description**

- WO 2022259466 A
- WO 2019069536 A